# EUROPÄISCHE PATENTSCHRIFT

(11) **EP 1 774 162 B1**
(45) Veröffentlichungstag und Bekanntmachung des Hinweises auf die Patenterteilung: **07.05.2008**
(21) Anmeldenummer: 05777714.6
(22) Anmeldetag: 20.07.2005
(51) Int. Cl.: F02D 41/40, F02D 35/02

(54) **VERFAHREN UND VORRICHTUNG ZUM STEUERN EINER BRENNKRAFTMASCHINE**
METHOD AND DEVICE FOR CONTROLLING AN INTERNAL COMBUSTION ENGINE
PROCEDE ET DISPOSITIF DE COMMANDE D'UN MOTEUR A COMBUSTION INTERNE

(30) Priorität: 05.08.2004 DE 102004038122
(43) Veröffentlichungstag der Anmeldung: 18.04.2007
(73) Patentinhaber: SIEMENS AKTIENGESELLSCHAFT, 80333 München (DE)
(72) Erfinder: ELLMER, Dietmar, 93059 Regensburg (DE); HERWEG, Rüdiger, 73734 Esslingen (DE); LAUER, Thorsten, 93183 Holzheim a. Forst (DE); MLADEK, Michael, 76228 Karlsruhe (DE); STELTER, Mayk, 70327 Stuttgart (DE)
(86) Internationale Anmeldenummer: PCT/EP2005/053496
(87) Internationale Veröffentlichungsnummer: WO 2006/015928

(56) Entgegenhaltungen:
- EP-A- 0 399 069
- EP-A- 1 138 896
- DE-C1- 19 900 738
- US-A- 5 219 227
- US-A1- 2002 046 741
- RAUSEN D J ET AL: "A mean-value model for control of homogeneous charge compression ignition (HCCI) engines" AMERICAN CONTROL CONFERENCE, 2004. PROCEEDINGS OF THE 2004 BOSTON, MA, USA JUNE 30-JULY 2, 2004, PISCATAWAY, NJ, USA,IEEE, Bd. 1, 30. Juni 2004 (2004-06-30), Seiten 125-131, XP010761029 ISBN: 0-7803-8335-4

## Beschreibung

Die Erfindung betrifft ein Verfahren und eine Vorrichtung zum Steuern einer Brennkraftmaschine mit mindestens einem Zylinder, in dem ein Brennraum ausgebildet ist und dem ein Kolben zugeordnet ist mit einem Ansaugtrakt, der abhängig von der Stellung eines Gaseinlassventils mit dem Brennraum des Zylinders kommuniziert, mit einem Abgastrakt, der abhängig von der Stellung eines Gasauslassventils mit dem Brennraum des Zylinders kommuniziert, und mit einem Zylinderdrucksensor, der den Druck in dem Brennraum des Zylinders erfasst.

Steigende Energiekosten und Verschärfungen gesetzlicher Bestimmungen bezüglich des zulässigen Kraftstoffverbrauchs oder der zulässigen Schadstoffemissionen von Kraftfahrzeugen, in denen Brennkraftmaschinen angeordnet sind, machen es erforderlich, Maßnahmen zu ergreifen, um einerseits den Kraftstoffverbrauch von Brennkraftmaschinen zu senken und andererseits sicherzustellen, dass die von dem Kraftfahrzeug ausgestoßenen Schadstoffemissionen geringe Werte einnehmen. In diesem Zusammenhang ist es bekannt geworden, Brennkraftmaschinen, insbesondere benzinbetriebene, in bestimmten Betriebspunkten mit einem selbstzündenden Brennverfahren zu betreiben, das auch als Homogeneous Charge Compression Ignition (HCCI), Compressed Auto Ignition (CAI) oder Raumzündungsverfahren (RZV) genannt wird. Bei diesem selbstzündenden Brennverfahren wird die Selbstzündung und damit der Verbrennungsverlauf über die reaktive Energiemenge in dem Zylinder der Brennkraftmaschine gesteuert. Diese Energiemenge kann unter anderem durch einen im Vergleich zum konventionell gezündeten Ottomotorenbetrieb sehr hohen Restgasanteil bereitgestellt werden. Auch für konventionell gezündete Ottomotoren ist es bekannt, im unteren und mittleren Teillastbereich die Brennkraftmaschine mit einer hohen Abgasrückführrate zu betreiben, um die Verbrennung bezüglich der Gütekriterien Verbrauch und Emissionen zu optimieren.

Aus der DE 199 007 38 C1 ist ein Verfahren zum Bestimmen eines Brennraumdruckverlaufs bei einer Brennkraftmaschine bekannt. Bei dem Verfahren wird ein Schätzwert eines Zylinderdrucks abhängig von einem vorangegangenen Messwert des Zylinderdrucks, einem diesem zugeordneten Volumen des Zylinders und einem dem Schätzwert des Zylinderdrucks zugeordneten Volumen des Zylinders und eines Polytropenexponenten mittels der Polytropengleichung abgeschätzt. Der Polytropenexponent ist vorgegeben abhängig von einer Kühlmitteltemperatur.

Aus der EP 0 399 069 A1 ist ein weiteres Verfahren zum Bestimmen des Brennraumdrucks in einem Zylinder einer Brennkraftmaschine bekannt. Dazu wird eine Empfindlichkeit des dieser Brennkraftmaschine zugeordneten Zylinderdrucksensors in jedem Arbeitszyklus des Zylinders ermittelt und zwar abhängig von drei Spannungsmesssignalen und einem vorgegebenen Polytropenexponenten.

Aus der US 2002/004671 A1 ist es bekannt, Stellsignale für Stellglieder einer Brennkraftmaschine in Abhängigkeit einer gemessenen Abgastemperatur zu bestimmen.

Aufgabe der Erfindung ist es, ein Verfahren und eine Vorrichtung zum Steuern einer Brennkraftmaschine zu schaffen, die ein präzises Steuern der Brennkraftmaschine gewährleisten.

Die Erfindung zeichnet sich aus durch ein Verfahren und eine entsprechende Vorrichtung zum Steuern einer Brennkraftmaschine mit mindestens einem Zylinder, in dem ein Brennraum ausgebildet ist und dem ein Kolben zugeordnet ist, mit einem Abgastrakt, der abhängig von der Stellung eines Gasauslassventils mit dem Brennraum des Zylinders kommuniziert, und mit einem Zylinderdrucksensor, der den Druck in dem Brennraum des Zylinders erfasst. Ein Polytropenexponent wird bestimmt abhängig von mindestens zwei Messwerten des Drucks in dem Brennraum, die während des Arbeitstaktes des Zylinders nach Abschluss der Verbrennung eines in dem Zylinder befindlichen Luft/Kraftstoff-Gemisches und vor einem Öffnen des Gasauslassventils erfasst werden. Dem Bestimmen des Polytropenexponent liegt die Erkenntnis zugrunde, dass eine starke Korrelation zwischen Zylinderdruck und Gastemperatur nur nach Abschluss der Verbrennung des Luft/Kraftstoff-Gemisches existiert, während der Temperaturverlauf während der Verbrennung des Luft/Kraftstoff-Gemisches sehr schwer abschätzbar ist.

Eine erste Temperatur des Abgases wird ermittelt, die charakteristisch ist für die Temperatur des Abgases vor dem Öffnen des Gasauslassventils, insbesondere für die Temperatur des Abgases unmittelbar vor dem Öffnen des Gasauslassventils. Eine zweite Temperatur des Abgases wird ermittelt, das nach dem Schließen des Gasauslassventils in den Brennraum des Zylinders verbleibt, und zwar abhängig von der ersten Temperatur des Abgases, dem der ersten Temperatur zugeordneten Druck in den Brennraum, also dem zu dem Zeitpunkt der ersten Temperatur vorliegenden Druck, ferner abhängig von dem Druck in dem Brennraum nach dem Schließen des Gasauslassventils und dem Polytropenexponenten. Ein Stellsignal zum Steuern eines Stellglieds der Brennkraftmaschine wird erzeugt abhängig von der zweiten Temperatur des Abgases. Die zweite Temperatur kann so einfach und präzise bestimmt werden und wirkt sich auf den Ablauf des nächsten Verbrennungsvorganges des Luft/Kraftstoff-Gemisches in dem Brennraum des Zylinders der Brennkraftmaschine aus. Durch das Erzeugen des Stellsignals zum Steuern eines Stellglieds der Brennkraftmaschine abhängig von der zweiten Temperatur des Abgases kann die Brennkraftmaschine sehr präzise gesteuert werden.

In einer vorteilhaften Ausgestaltung der Erfindung werden die Messwerte des Drucks bei einem Kurbelwellenwinkel größer als einem vorgegebenen Kurbelwellenwinkel erfasst, der so vorgegeben ist, dass die Verbrennung des Luft/Kraftstoff-Gemisches abgeschlossen ist.

In diesem Zusammenhang ist es vorteilhaft, wenn der vorgegebene Kurbelwellenwinkel in etwa 80° nach dem oberen Totpunkt des Kolbens beträgt. Dies hat den Vorteil, dass dann die Verbrennung des Luft/Kraftstoff-Gemisches sicher abgeschlossen ist. Je nach Ausgestaltung der Brennkraftmaschine, insbesondere im Falle eines HCCI-Brennverfahrens kann der vorgegebene Kurbelwellenwinkel auch wesentlich näher an dem oberen Totpunkt des Kolbens gewählt sein.

In einer weiteren vorteilhaften Ausgestaltung der Erfindung ist der vorgegebene Kurbelwellenwinkel kleiner als in etwa 100° nach dem oberen Totpunkt des Kolbens. Dies hat den Vorteil, dass der Zylinderdruck noch hohe Werte aufweist. Dies trägt insbesondere zur Güte der Steuerung der Brennkraftmaschine stark bei, wenn der Zylinderdrucksensor zum Erfassen hoher Drücke ausgelegt ist und gegebenenfalls beim Erfassen niedriger Drücke einen größeren Messfehler hat. Besonders vorteilhaft ist, wenn die Messwerte des Drucks so erfasst werden, dass zwischen ihnen ein möglichst großer Druckunterschied besteht. Dadurch kann ein Einfluss eines Messfehlers minimiert werden.

In einer weiteren vorteilhaften Ausgestaltung der Erfindung wird die erste Temperatur des Abgases abhängig von einem Druck in den Brennraum ermittelt, der ermittelt wird abhängig von einem der Messwerte des Drucks in dem Brennraum, der Größe, die charakteristisch ist für das dem jeweiligen Messwert des Drucks zugeordnete Volumen des Brennraums, der Größe, die charakteristisch ist für das Volumen des Brennraums, bei dem das Abgas die erste Temperatur hat, und dem Polytropenexponent. So kann die Lage des Messwertes des Drucks unabhängig von dem Kurbelwellenwinkel gewählt werden, dem die erste Temperatur zugeordnet ist. Dies ist somit insbesondere dann von Vorteil, wenn der Druck präziser bei höheren Druckwerten erfasst werden kann und der Druck relativ niedrig ist, der bei dem Kurbelwellenwinkel in dem Brennraum herrscht, bei dem das Abgas die erste Temperatur hat.

In einer weiteren vorteilhaften Ausgestaltung der Erfindung wird die erste Temperatur des Abgases mittels der allgemeinen Gasgleichung ermittelt und die Gaskonstante fest vorgegeben. Dies hat den Vorteil, dass die erste Temperatur so sehr einfach ermittelt werden kann und beruht auf der Erkenntnis, dass der Wert der Gaskonstante nur wenig differiert.

In einer weiteren vorteilhaften Ausgestaltung der Erfindung wird die erste Temperatur des Abgases mittels der allgemeinen Gasgleichung ermittelt und die Gaskonstante abhängig von dem Luft/Kraftstoff-Verhältnis in dem Brennraum des Zylinders ermittelt. Dies hat den Vorteil, dass die erste Temperatur einfach noch präziser ermittelt werden kann und zudem das Luft/Kraftstoff-Verhältnis in dem Brennraum ohnehin im Rahmen einer λ-Regelung ermittelt wird und somit ohne zusätzlichen Aufwand verfügbar ist.

In einer weiteren vorteilhaften Ausgestaltung der Erfindung wird der Druck in dem Brennraum nach dem Schließen des Gasauslassventils durch einen berechneten Druckwert angenähert und die zweite Temperatur des Abgases abhängig von einem Umgebungsparameter und/oder einer Drehzahl und/oder dem Kurbelwellenwinkel des Öffnens oder Schließens des Gasauslassventils und/oder einer Kühlmitteltemperatur ermittelt. So ist kein physikalisches dynamisches Modell des Verlaufs des Drucks des Abgases, während das Gasauslassventil geöffnet ist, notwendig. Dennoch kann so die zweite Temperatur des Abgases äußerst präzise berücksichtigt werden.

In einer weiteren vorteilhaften Ausgestaltung der Erfindung wird der Druck in dem Brennraum nach dem Schließen des Gasauslassventils ermittelt. Dies erfolgt abhängig von mindestens einem weiteren Druck und den dem mindestens einem weiteren Druck und dem Druck in dem Brennraum nach dem Schließen des Gasauslassventils zuzuordnenden Volumina. Der weitere Druck ist einem Kurbelwellenwinkel zugeordnet, der innerhalb des Kurbelwellenwinkelbereichs liegt, in dem das Gasauslassventil wieder geschlossen ist, aber das Gaseinlassventil noch nicht wieder geöffnet ist, und der weitere Druck wird zeitlich nach dem Druck in dem Brennraum nach dem Schließen des Gasauslassventils erfasst. Der weitere Druck kann so ggf. präziser erfasst werden und damit auch der Druck in dem Brennraum nach dem Schließen des Gasauslassventils präziser ermittelt werden.

In einer weiteren vorteilhaften Ausgestaltung der Erfindung wird ein weiterer Polytropenexponent abhängig von mindestens dem weiteren Druck, noch einem weiteren Druck und den dem mindestens einem weiteren Druck und dem noch einem weiteren Druck in dem Brennraum nach dem Schließen des Gasauslassventils zuzuordnenden Volumina ermittelt. Der noch weitere Druck ist einem Kurbelwellenwinkel zugeordnet, der innerhalb des Kurbelwellenwinkelbereichs liegt, in dem das Gasauslassventil wieder geschlossen ist, aber das Gaseinlassventil noch nicht wieder geöffnet ist, und der noch weitere Druck wird zeitlich nach dem Druck in dem Brennraum nach dem Schließen des Gasauslassventils erfasst. Der weitere Polytropenexponent ist dann noch genauer für das Ermitteln des Drucks in dem Brennraum nach dem Schließen des Gasauslassventils.

In einer weiteren vorteilhaften Ausgestaltung der Erfindung wird eine erste Kraftstoffmasse abhängig von der zweiten Temperatur ermittelt, die nach dem Schließen des Gasauslassventils und vor dem Öffnen des Gaseinlassventils in dem Brennraum des Zylinders zugemessen werden soll, und das Einspritzventil wird entsprechend angesteuert. Dies ist insbesondere bei einem selbstzündenden Brennverfahren von Vorteil, bei dem bevorzugt eine hohe Abgasrückführrate eingestellt wird, um die hohen Zündtemperaturen zu erreichen. Durch das Ermitteln der ersten Kraftstoffmasse abhängig von der zweiten Temperatur kann so der Verbrennungsschwerpunkt präzise eingestellt werden. Die Lage des Verbrennungsschwerpunktes hängt ohne Berücksichtigung der zweiten Temperatur sehr stark ab von der Qualität der vorangehenden Verbrennung, die sich auf die zweite Temperatur stark auswirkt.

In diesem Zusammenhang ist es auch vorteilhaft, wenn ein Kurbelwellenwinkel, an dem die erste Kraftstoffmasse zugemessen wird, abhängig von der zweiten Temperatur ermittelt wird. Auf diese Weise kann der Verbrennungsschwerpunkt bei einem selbstzündenden Brennverfahren präzise eingestellt werden.

In einer weiteren vorteilhaften Ausgestaltung der Erfindung wird der Kurbelwellenwinkel, an dem eine zweite Kraftstoffmasse zugemessen wird, abhängig von der zweiten Temperatur ermittelt, wobei die zweite Kraftstoffmasse nach dem Öffnen des Gaseinlassventils in den Zylinder zugemessen wird. Auch auf diese Weise kann ein Verbrennungsschwerpunkt bei einem selbstzündenden Brennverfahren präzise eingestellt werden.

Ausführungsbeispiele der Erfindung sind im Folgenden anhand der schematischen Zeichnungen erläutert. Es zeigen:
- Figur 1: eine Brennkraftmaschine mit einer Steuereinrichtung,
- Figur 2: ein Ablaufdiagramm eines ersten Teils eines Programms zum Steuern der Brennkraftmaschine und

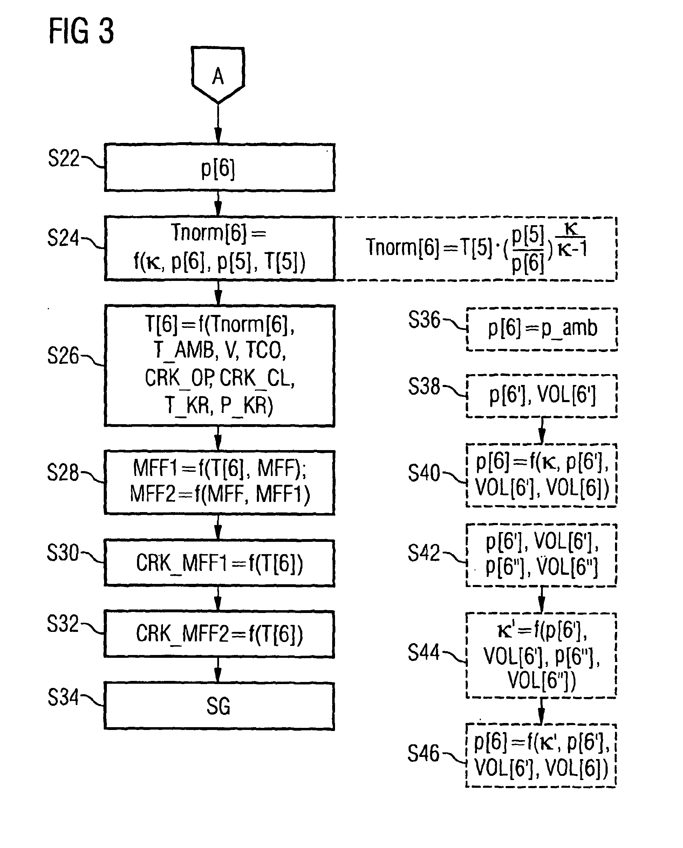

- Figur 3: ein Ablaufdiagramm eines zweiten Teils des Programms zum Steuern der Brennkraftmaschine.

Elemente gleicher Konstruktion oder Funktion sind figurenübergreifend mit den gleichen Bezugszeichen gekennzeichnet.

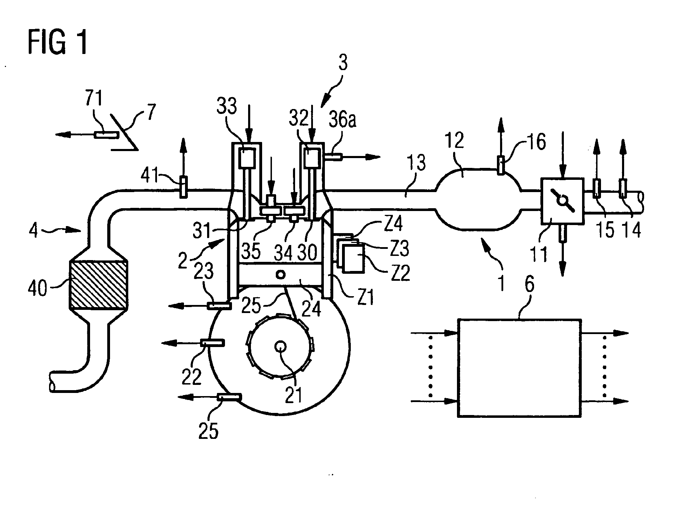

Eine Brennkraftmaschine (Figur 1) umfasst einen Ansaugtrakt 1, einen Motorblock 2, einen Zylinderkopf 3 und einen Abgastrakt 4. Der Ansaugtrakt 1 umfasst vorzugsweise eine Drosselklappe 11, ferner einen Sammler 12 und ein Saugrohr 13, das hin zu einem Zylinder Z1 über einen Einlasskanal in den Motorblock 2 geführt ist. Der Motorblock 2 umfasst ferner eine Kurbelwelle 21, welche über eine Pleuelstange 25 mit dem Kolben 24 des Zylinders Z1 gekoppelt ist.

Der Zylinderkopf 3 umfasst einen Ventiltrieb mit einem Gaseinlassventil 30, einem Gasauslassventil 31 und Ventilantrieben 32, 33. Der Zylinderkopf 3 umfasst ferner ein Einspritzventil 34 und eine Zündkerze 35. Alternativ kann das Einspritzventil 34 auch in dem Saugrohr 13 angeordnet sein.

Der Abgastrakt 4 umfasst einen Katalysator 40, der bevorzugt als Dreiwegekatalysator ausgebildet ist.

Ferner ist eine Steuereinrichtung 6 vorgesehen, der Sensoren zugeordnet sind, die verschiedene Messgrößen erfassen und jeweils den Messwert der Messgröße ermitteln. Die Steuereinrichtung 6 ermittelt abhängig von mindestens einer der Messgrößen Stellgrößen, die dann in ein oder mehrere Stellsignale zum Steuern der Stellglieder mittels entsprechender Stellantriebe umgesetzt werden. Die Steuereinrichtung 6 kann auch als Vorrichtung zum Steuern der Brennkraftmaschine bezeichnet werden.

Die Sensoren sind ein Pedalstellungsgeber 71, welcher die Stellung eines Fahrpedals 7 erfasst, ein Luftmassenmesser 14, welcher einen Luftmassenstrom stromaufwärts der Drosselklappe 11 erfasst, ein Temperatursensor 15, welcher die Ansauglufttemperatur erfasst, ein Kurbelwellenwinkelsensor 22, welcher einen Kurbelwellenwinkel CRK erfasst, dem dann eine Drehzahl N zugeordnet wird, ein weiterer Temperatursensor 23, der eine Kühlmitteltemperatur TCO erfasst, ein Nockenwellenwinkelsensor 36a, der einen Nockenwellenwinkel erfasst, ein Zylinderdrucksensor 37, der einen Druck p in einem Brennraum des Zylinders Z1 erfasst, und eine Abgassonde 41 welche einen Restsauerstoffgehalt des Abgases erfasst und deren Messsignal charakteristisch ist für das Luft/Kraftstoff-Verhältnis in dem Zylinder Z1. Je nach Ausführungsform der Erfindung kann eine beliebige Untermenge der genannten Sensoren oder auch zusätzliche Sensoren vorhanden sein.

Die Stellglieder sind beispielsweise die Drosselklappe 11, die Gaseinlass- und Gasauslassventile 30, 31, das Einspritzventil 34 und die Zündkerze 35.

Neben dem Zylinder Z1 können auch noch weitere Zylinder Z2-Z4 vorgesehen sein, denen dann auch entsprechende Stellglieder zugeordnet sind.

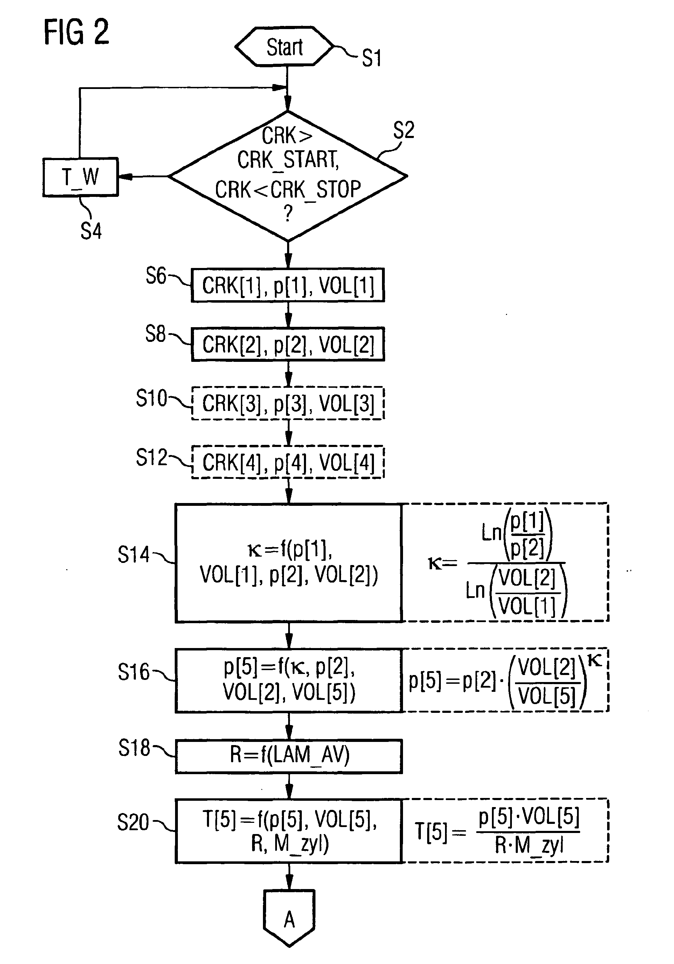

Ein Programm zum Steuern der Brennkraftmaschine wird in einem Schritt S1 (Figur 2) gestartet, in dem gegebenenfalls Variablen initialisiert werden.

In einem Schritt S2 wird geprüft, ob der aktuelle Kurbelwellenwinkel CRK größer ist als ein Start-Kurbelwellenwinkel CRK_START. Ferner wird geprüft, ob der aktuelle Kurbelwellenwinkel CRK kleiner ist als ein Stopp-Kurbelwellenwinkel CRK_STOP. Der Start-Kurbelwellenwinkel CRK_START ist vorzugsweise bei in etwa 80° Kurbelwellenwinkel nach dem Zünd-oberen Totpunkt des Kolbens 24 gewählt. Bei dem Start-Kurbelwellenwinkel CRK_START ist sichergestellt, dass die Verbrennung des in den Brennraum des Zylinders Z1 befindlichen Luft/Kraftstoff-Gemisches sicher abgeschlossen ist.

Bei einem Kurbelwellenwinkel CRK_STOP, der vorteilhaft bei in etwa 100° nach dem Zünd-oberen Totpunkt des Kolbens 24 gewählt ist, ist sichergestellt, dass der Druck in dem Zylinder noch einen sehr hohen Wert aufweist. Ein in den nachfolgenden Schritten S6 bis S12 erfolgende Erfassung von Messwerten des Drucks p in dem Brennraum des Zylinders Z1 kann dabei mit hoher Güte mittels des Zylinderdrucksensors 37 erfolgen. Zylinderdrucksensoren 37 sind in der Regel zum Erfassen sehr hoher Drücke ausgelegt. Bei niedrigeren Drücken haben sie gegebenenfalls einen größeren Messfehler.

Ist die Bedingung des Schrittes S2 nicht erfüllt, so wird das Programm in einem Schritt S4 fortgesetzt, in dem es für eine vorgegebene Wartezeit T_W verharrt, bevor die Bedingung des Schrittes S2 erneut geprüft wird.

Ist die Bedingung des Schrittes S2 hingegen erfüllt, so wird in einem Schritt S6 ein erster Messwert p[1] des Drucks in den Brennraum des Zylinders Z1 mittels des Zylinderdrucksensors 37 erfasst. Die bei den nachfolgenden Größen in Klammern angegebene Zahlen beziehen sich jeweils auf zugehörige Werte bei jeweils einem Kurbelwellenwinkel CRK. So beträgt der Kurbelwellenwinkel CRK[1] beispielsweise 80° nach dem Zünd-oberen Totpunkt, p[1] ist der diesem Kurbelwellenwinkel CRK[1] zugeordnete Messwert des Brennraumdrucks und VOL[1] ist das zugehörige Volumen des Brennraums des Zylinders.

In einem Schritt S8 werden bei einem Kurbelwellenwinkel CRK[2], der beispielsweise 85° nach dem Zünd-oberen Totpunkt beträgt ein zweiter Messwert p[2] des Drucks in den Brennraum des Zylinders Z1 erfasst und das zugehörige Volumen VOL[2] des Brennraums ermittelt. In einem gegebenenfalls vorgesehenen Schritt S10 wird bei einem Kurbelwellenwinkel CRK[3], der beispielsweise 90° nach dem Zünd-oberen Totpunkt beträgt, ein dritter Messwert p[3] des Drucks in dem Brennraum des Zylinders Z1 erfasst und das zugehörige Volumen VOL [3] des Brennraums des Zylinders Z1 zugeordnet. Ebenso wird in einem gegebenenfalls vorhandenen Schritt S12 bei einem Kurbelwellenwinkel CRK[4], der beispielsweise 100° nach dem Zünd-oberen Totpunkt beträgt, ein vierter Messwert p[4] des Drucks in den Brennraum des Zylinders erfasst und das entsprechende Volumen VOL[4] des Brennraums des Zylinders Z1 zugeordnet.

In einem Schritt S14 wird anschließend ein Polytropenexponent κ abhängig von dem ersten Messwert p[1] des Drucks in dem Brennraum des Zylinders Z1, des diesem zugeordnete Volumen VOL[1] des Brennraums des Zylinders, des zweiten Messwertes p[2] des Drucks in dem Brennraum des Zylinders Z1 und des zugeordneten Volumens VOL[2] ermittelt. Dies erfolgt vorzugsweise mittels entsprechender Auflösung der Polytropengleichung nach dem Polytropenexponenten κ, wie es beispielhaft in dem rechten Teil des Schrittes S14 wiedergegeben ist.

Bevorzugt wird der Polytropenexponent gemittelt durch mehrfaches Ermitteln des Polytropenexponenten K mittels verschiedener Permutationen der Wertepaare der Schritte S6 bis S12. So können Messfehler verringert werden und der Polytropenexponent κ somit noch genauer ermittelt werden.

In einem Schritt S16 wird dann ein Druck p[5] in dem Brennraum des Zylinders Z1 ermittelt, vorzugsweise unmittelbar vor dem Öffnen des Gasauslassventils 31, abhängig von dem Polytropenexponenten K, von dem zweiten Messwert p[2] des Drucks in dem Brennraum, von dem diesem zugeordneten Volumen VOL[2] des Brennraums des Zylinders Z1 und von dem dem Druck p[5] in dem Brennraum des Zylinders Z1 zugeordnete Volumen VOL[5]. Dies erfolgt vorzugsweise mittels der auf der rechten Seite des Schrittes S16 angegebenen Formel. Es kann jedoch alternativ, bei einem geeigneten Zylinderdrucksensor 37 auch durch ein weiteres Erfassen eines Messwertes erfolgen. Bevorzugt kann der Druck p[5] in dem Brennraum des Zylinders Z1 auch mehrfach abhängig von weiteren Messwerten des Drucks ermittelt werden und dann gemittelt werden.

In einem Schritt S18 wird eine Gaskonstante R bevorzugt abhängig von einem Istwert LAM_AV des Luft/Kraftstoff-Verhältnisses in dem Brennraum des Zylinders Z1 ermittelt, das von dem Messsignal der Sauerstoffsonde 41 abgeleitet ist. In einer einfacheren Ausgestaltung des Programms wird der Gaskonstante R in dem Schritt S18 ein vorgegebener Wert zugeordnet. Auch so kann eine für den Einzelfall ausreichende Genauigkeit bei der weiteren Berechnung sichergestellt werden, da die Gaskonstante nur eine geringe Variabilität zeigt.

In einem Schritt S20 wird dann die Temperatur T[5] des in dem Zylinder Z1 befindlichen Abgases abhängig von dem Druck p[5] in dem Brennraum des Zylinders Z1, des diesem zugeordneten Volumens VOL[5], der Gaskonstante R und der in dem Zylinder Z1 befindlichen Gasmasse M_ZYL ermittelt. Die in dem Zylinder Z1 befindliche Gasmasse M_ZYL kann beispielsweise mittels eines Saugrohrmodells abhängig von einem Öffnungsgrad der Drosselklappe und/oder dem Druck in dem Sammler 12 und/oder dem von den Luftmassensensor 15 erfassten Luftmassenstrom ermittelt werden unter Berücksichtigung der in dem Zylinder Z1 zugemessenen Kraftstoffmasse MFF. Das Berechnen der Temperatur T[5] erfolgt vorzugsweise mittels der allgemeinen Gasgleichung, wie sie auf der rechten Seite des Schrittes S20 angegeben ist.

In einem Schritt S22 wird ein Druck p[6] in dem Brennraum des Zylinders, der bevorzugt der Druck ist, zu dem Zeitpunkt, an dem das Gasauslassventil 31 gerade wieder geschlossen hat, durch eine Messung mittels des Zylinderdrucksensors 37 ermittelt. Alternativ zu dem Schritt S22 kann ein Schritt S36 vorgesehen sein, in dem dem Druck p[6] in besonders einfacher Weise direkt ein Umgebungsdruck p_AMB zugeordnet wird.

In einer weiteren Alternative zu dem Schritt S22 sind Schritte S38 und S40 vorgesehen. In dem Schritt S38 wird ein Druck p[6'] ermittelt, der einem Kurbelwellenwinkel CRK zugeordnet ist, der innerhalb des Kurbelwellenwinkelbereichs liegt, in dem das Gasauslassventil 31 wieder geschlossen ist, aber das Gaseinlassventil 30 noch nicht wieder geöffnet ist, und der zeitlich nach dem dem Druck p[6] zuzuordnenden Kurbelwellenwinkel liegt. Ferner wird das dem Druck p[6'] zuzuordnende Volumen VOL[6'] zwischengespeichert.

In dem anschließenden Schritt S40 wird dann der Druck p[6] ermittelt abhängig von dem Polytropenexponenten K, dem Druck p[6'], und den Volumina VOL[6], VOL[6']. Dies erfolgt entsprechend dem Schritt S16.

In einer weiteren Alternative zu dem Schritt S22 sind Schritte S42, S44 und S46 vorgesehen. In dem Schritt S42 wird entsprechend dem Schritt S38 der Druck p[6'] und das zugehörige Volumen VOL[6'] ermittelt. Ferner wird mindestens noch ein weiterer Druck p[6"]ermittelt, der einem Kurbelwellenwinkel CRK zugeordnet ist, der innerhalb des Kurbelwellenwinkelbereichs liegt, in dem das Gasauslassventil 31 wieder geschlossen ist, aber das Gaseinlassventil 30 noch nicht wieder geöffnet ist, und der zeitlich ebenfalls nach dem dem Druck p[6] zuzuordnenden Kurbelwellenwinkel liegt. Ferner wird das dem Druck p[6"] zuzuordnende Volumen VOL[6"] zwischengespeichert.

In dem Schritt S44 wird dann ein weiterer Polytropenexponent K' abhängig von den Drücken p[6'], p[6"] und den Volumina VOL[6'], VOL[6"] ermittelt und zwar entsprechend der Vorgehensweise des Schrittes S14. Auch in dem Schritt S44 kann der weitere Polytropenexponent K' abhängig von weiteren Drücken und zugeordneten Volumina ermittelt werden und zwar als mittlerer weiterer Polytropenexponent.

Der Schritt S46 entspricht dem Schritt S40 mit dem Unterschied, dass zum Ermitteln des Drucks p[6] der weitere oder mittlere weitere Polytropenexponent K' eingesetzt wird.

Der Druck p[6] kann zusätzlich in den Schritten S38 oder S46 auch mehrfach mit unterschiedlichen weiteren Drücken ermittelt werden und dann gemittelt werden. So wirken sich Messfehler bei den einzelnen Messungen des Drucks weniger stark aus.

In einem Schritt S24 wird dann anschließend eine dem Druck p[6] in dem Brennraum des Zylinders Z1 zuzuordnende Basis-Temperatur Tnorm[6] des Abgases abhängig von dem Polytropenexponenten κ, dem Druck p[6] und dem Druck p[5] in dem Brennraum des Zylinders Z1 und der Temperatur T[5] des Abgases in dem Brennraum des Zylinders Z1 ermittelt. Dies erfolgt bevorzugt mittels der auf der rechten Seite des Schrittes S24 angegebenen Beziehung. Falls vor dem Schritt S24 der Schritt S44 durchgeführt wurde, kann das Berechnen der Basis-Temperatur Tnorm[6] auch abhängig von dem Polytropenexponenten K' erfolgen.

Eine dem Druck p[6] in dem Brennraum des Zylinders Z1 zuzuordnende Temperatur T[6] des Abgases in dem Zylinder Z1 wird anschließend in einem Schritt S26 ermittelt abhängig von der Basis-Temperatur Tnorm[6], einer Umgebungstemperatur T_AMB und/oder einer Fahrzeuggeschwindigkeit V eines Fahrzeugs, in dem die Brennkraftmaschine angeordnet ist, und/oder der Kühlmitteltemperatur TCO und/ oder einem Öffnungswinkel CRK_OP und/oder einem Schließwinkel CRK_CL des Gasauslassventils 31. Auf diese Weise kann einfach und mit hoher Präzision die Temperatur T[6], die insbesondere die Abgastemperatur zum Zeitpunkt des Schließens des Gasauslassventils 31 ist, ermittelt werden, ohne dass ein Abgasgegendruckmodell oder ein entsprechender Abgasgegendrucksensor benötigt wird. Ferner kann ebenfalls ein Abgastemperatursensor entfallen. Der Einfluss der Umgebungstemperatur T_AMB, der Fahrzeuggeschwindigkeit V oder der Kühlmitteltemperatur TCO oder des Öffnungswinkels CRK_OP oder des Schließwinkels CRK_CL des Gasauslassventils 31 auf die Temperatur T[6] wird vorzugsweise mittels entsprechender Kennlinien oder Kennfelder berücksichtigt. Alternativ oder zusätzlich kann beim Ermitteln der Temperatur T[6] auch noch eine Abgastemperatur T_KR in dem Abgastrakt und/oder ein Druck in dem Abgastrakt P_KR berücksichtigt werden.

Die nachfolgenden Schritte S28 bis S32 werden abgearbeitet, wenn die Brennkraftmaschine mittels des Raumzündungsverfahrens betrieben wird. Wird die Brennkraftmaschine hingegen mittels eines anderen Brennverfahrens betrieben, so kann die Temperatur T[6], die bevorzugt die Abgastemperatur im Zeitpunkt des Schließens des Gasauslassventils 31 ist, eine Eingangsgröße für beliebige Funktionen der Steuereinrichtung sein.

In einem Schritt S28 wird eine zuzuführende erste Kraftstoffmasse MFF1 abhängig von der Temperatur T[6] des Abgases und einer gesamt dem Zylinder während eines Arbeitsspiels des Zylinders Z1 zuzuführenden Kraftstoffmasse MFF ermittelt. Die erste Kraftstoffmasse MFF1 wird während einer Zwischenkompression des Zylinders Z1 in dem Brennraum des Zylinders Z1 zugemessen. Unter Zwischenkompression wird in diesem Zusammenhang verstanden die Zeitdauer nach dem Schließen des Gasauslassventils 31 und vor dem Öffnen des Gaseinlassventils 30.

Durch das Zumessen der ersten Kraftstoffmenge MFF1 während der Zwischenkompression erfolgt aufgrund des in der Regel noch geringen Sauerstoffanteils in dem Abgas eine exotherme Reaktion und ein Fraktionieren des zugemessenen Kraftstoffs, wobei Radikale entstehen, die die spätere Verbrennung des Luft/Kraftstoff-Gemisches in dem Zylinder beschleunigen. Durch die erste zuzuführende Kraftstoffmasse MFF1 kann so der Zeitpunkt des Luft/Kraftstoff-Gemisches wirksam eingestellt werden. Dabei spielt eine große Rolle, dass die Temperatur T[6] von Arbeitsspiel zu Arbeitsspiel sich deutlich unterscheiden kann und dann wiederum einen starken Einfluss auf die Verbrennung des nächsten Arbeitsspiels nimmt. Dies kann durch entsprechendes Einstellen der ersten Kraftstoffmasse MFF1 ausgeglichen werden und so eine präzise Einstellung des Zündzeitpunktes des Luft/Kraftstoff-Gemisches erfolgen. Ferner wird in dem Schritt S28 auch noch eine zweite Kraftstoffmasse abhängig von der gesamt dem Zylinder Z1 zuzumessenden Kraftstoffmasse MFF und der ersten Kraftstoffmasse MFF1 ermittelt. Dies erfolgt bevorzugt durch Bilden der Differenz der gesamt dem Zylinder Z1 zuzuführenden Kraftstoffmasse MFF und der ersten Kraftstoffmasse MFF1. Die zweite Kraftstoffmasse MFF2 wird erst nach dem Öffnen des Gaseinlassventils 30 in den Zylinder Z1 zugemessen.

In einem Schritt S30 wird ein Kurbelwellenwinkel CRK_MFF1 des Zumessens der ersten Kraftstoffmasse MFF1 bevorzugt abhängig von der Temperatur T[6] des Abgases ermittelt. Auch durch den Kurbelwellenwinkel CRK_MFF1 des Zumessens der ersten Kraftstoffmasse MFF1 kann vorteilhaft der Zündzeitpunkt des Luft/Kraftstoff-Gemisches in dem Zylinder Z1 beeinflusst werden.

In einem Schritt S32 wird ein Kurbelwellenwinkel CRK_MFF2 abhängig von der Temperatur T[6] des Abgases ermittelt, der auch den Zündzeitpunkt des Luft/Kraftstoff-Gemisches in dem Zylinder Z1 beeinflusst.

In einem Schritt S34 werden dann entsprechende Stellsignale SG zum Ansteuern des Einspritzventils 34 ermittelt. Alternativ kann z.B. auch in den Schritten S30 und S32 der Kurbelwellenwinkel CRK_MFF1 und/oder der Kurbelwellenwinkel CRK_MFF2 des Zumessens der ersten bzw. zweiten Kraftstoffmasse MFF1, MFF2 unabhängig von der Temperatur T[6] sein. Ferner kann alternativ auch die erste Kraftstoffmasse MFF1 unabhängig von der Temperatur T[6] des Abgases sein. Zum Ansteuern der Einspritzventile 34 weiterer Zylinder Z2 bis Z4 werden dann in der Steuereinrichtung 6 entsprechende Programme abgearbeitet.

## Patentansprüche

1. Verfahren zum Steuern einer Brennkraftmaschine mit mindestens einem Zylinder (Z1 bis Z4), in dem ein Brennraum ausgebildet ist und dem ein Kolben (24) zugeordnet ist, mit einem Abgastrakt (4), der abhängig von der Stellung eines Gasauslassventils (31) mit dem Brennraum des Zylinders (Z1 bis Z4) kommuniziert, und mit einem Zylinderdrucksensor (37), der den Druck (p) in dem Brennraum des Zylinders (Z1 bis Z4) erfasst, bei dem
- ein Polytropenexponent (κ) bestimmt wird abhängig von mindestens zwei Messwerten (p[1], p[2], p[3], p[4]) des Drucks (p) in dem Brennraum, die während des Arbeitstaktes des Zylinders (Z1 bis Z4) nach Abschluss der Verbrennung eines in dem Zylinder (Z1 bis Z4) befindlichen Luft/Kraftstoff-Gemisches und vor einem Öffnen des Gasauslassventils (31) erfasst werden,
- eine erste Temperatur ( T[5]) des Abgases ermittelt wird, die charakteristisch ist für die Temperatur des Abgases vor dem Öffnen des Gasauslassventils (31),
- eine zweite Temperatur (T[6]) des Abgases ermittelt wird, das nach dem Schließen des Gasauslassventils (31) in dem Brennraum des Zylinders verbleibt, und zwar abhängig von der ersten Temperatur (T[5]) des Abgases, dem dieser zugeordneten Druck (p[5]) in dem Brennraum, dem Druck (p[6]) in dem Brennraum nach dem Schließen des Gasauslassventils (31) und dem Polytropenexponenten (K), und
- ein Stellsignal (SG) zum Steuern eines Stellglieds der Brennkraftmaschine erzeugt wird abhängig von der zweiten Temperatur (T[6]) des Abgases.

2. Verfahren nach Anspruch 1,
bei dem die Messwerte (p[1], p[2], p[3], p[4]) des Drucks (p) des Abgases in dem Brennraum des Zylinders (Z1 bis Z4) bei einem Kurbelwellenwinkel (CRK) größer als einem vorgegebenen Kurbelwellenwinkel erfasst werden, der so vorgegeben ist, dass die Verbrennung des Luft/Kraftstoff-Gemisches abgeschlossen ist.

3. Verfahren nach Anspruch 2,
bei dem der vorgegebene Kurbelwellenwinkel größer oder gleich als in etwa 80° nach dem oberen Totpunkt des Kolbens (24) ist.

4. Verfahren nach Anspruch 2 oder 3,
bei dem der vorgegebene Kurbelwellenwinkel kleiner oder gleich als in etwa 100° nach dem oberen Totpunkt des Kolbens (24) ist.

5. Verfahren nach einem der vorstehenden Ansprüche,
bei dem die erste Temperatur (T[5]) des Abgases abhängig von einem Druck (p[5]) in dem Brennraum ermittelt wird, der ermittelt wird abhängig von einem der Messwerte (p[1], p[2], p[3], p[4]) des Drucks (p) in dem Brennraum, der Größe, die charakteristisch ist für das dem jeweiligen Messwert (p[1], p[2], p[3], p[4]) des Drucks (p) zugeordnete Volumen (VOL[2]) des Brennraums, der Größe, die charakteristisch ist für das Volumen (VOL[5]) des Brennraums, bei dem das Abgas die erste Temperatur hat, und dem Polytropenexponent (K).

6. Verfahren nach einem der vorstehenden Ansprüche,
bei dem die erste Temperatur (T[5]) des Abgases mittels der allgemeinen Gasgleichung ermittelt wird und die Gaskonstante (R) fest vorgegeben ist.

7. Verfahren nach einem der Ansprüche 1 bis 6,
bei dem die erste Temperatur des Abgases mittels der allgemeinen Gasgleichung ermittelt wird und die Gaskonstante (R) abhängig von dem Luft/Kraftstoff-Verhältnis in dem Brennraum des Zylinders (Z1 bis Z4) ermittelt wird.

8. Verfahren nach einem der vorstehenden Ansprüche,
bei dem der Druck (p[6]) in dem Brennraum nach dem Schließen des Gasauslassventils (31) durch einen vorgegebenen Druckwert angenähert ist und die zweite Temperatur des Abgases abhängig von einem Umgebungsparameter und/oder einer Drehzahl (n) und/oder dem Kurbelwellenwinkel des Öffnens oder Schließens des Gasauslassventils und/oder einer Kühlmitteltemperatur (TCO) ermittelt wird.

9. Verfahren nach einem der vorstehenden Ansprüche,
bei dem der Druck (p[6]) in dem Brennraum nach dem Schließen des Gasauslassventils (31) ermittelt wird abhängig von mindestens einem weiteren Druck (p[6']) und den dem mindestens einem weiteren Druck (p[6']) und dem Druck (p[6]) in dem Brennraum nach dem Schließen des Gasauslassventils (31) zuzuordnenden Volumina (VOL[6'], VOL[6]), wobei der weitere Druck (p[6']) einem Kurbelwellenwinkel (CRK) zugeordnet ist, der innerhalb des Kurbelwellenwinkelbereichs liegt, in dem das Gasauslassventil (31) wieder geschlossen ist, aber das Gaseinlassventil (30) noch nicht wieder geöffnet ist, und der weitere Druck (p[6']) zeitlich nach dem Druck (p[6]) erfasst wird.

10. Verfahren nach Anspruch 9,
bei dem ein weiterer Polytropenexponent (K') abhängig von mindestens dem weiteren Druck (p[6']), noch einem weiteren Druck (p[6"]) und den dem mindestens einem weiteren Druck p[6'] und dem noch einem weiteren Druck (p[6 "]) in dem Brennraum nach dem Schließen des Gasauslassventils (31) zuzuordnenden Volumina VOL[6'], VOL[6 "] ermittelt wird, wobei der noch weitere Druck (p[6 "]) einem Kurbelwellenwinkel (CRK) zugeordnet ist, der innerhalb des Kurbelwellenwinkelbereichs liegt, in dem das Gasauslassventil (31) wieder geschlossen ist, aber das Gaseinlassventil (30) noch nicht wieder geöffnet ist, und der noch weitere Druck (p[6"]) zeitlich nach dem Druck (p[6]) erfasst wird.

11. Verfahren nach einem der vorstehenden Ansprüche,
bei dem eine erste Kraftstoffmasse (MFF1) abhängig von der zweiten Temperatur (T[6]) des Abgases ermittelt wird, die nach dem Schließen des Gasauslassventils (31) und vor dem Öffnen des Gaseinlassventils (30) in den Brennraum des Zylinders (Z1 bis Z4) zugemessen werden soll, und das Einspritzventil (34) entsprechend angesteuert wird.

12. Verfahren nach Anspruch 11,
bei dem ein Kurbelwellenwinkel (CRK_MFF1), an dem die erste Kraftstoffmasse (MFF1) zugemessen wird, abhängig von der zweiten Temperatur (T[6]) ermittelt wird.

13. Verfahren nach einem der Ansprüche 11 oder 12,
bei dem ein Kurbelwellenwinkel (CRK_MFF2), an dem eine zweite Kraftstoffmasse (MFF2) zugemessen wird, abhängig von der zweiten Temperatur (T[6]) ermittelt wird, wobei die zweite Kraftstoffmasse (MFF2) nach dem Öffnen des Gaseinlassventils (30) in den Zylinder (Z1 bis Z4) zugemessen wird.

14. Vorrichtung zum Steuern einer Brennkraftmaschine mit mindestens einem Zylinder (Z1 bis Z4), in dem ein Brennraum ausgebildet ist und dem ein Kolben (24) zugeordnet ist, mit einem Abgastrakt (4), der abhängig von der Stellung eines Gasauslassventils (31) mit dem Brennraum des Zylinders (Z1 bis Z4) kommuniziert, und mit einem Zylinderdrucksensor (37), der den Druck (p) in dem Brennraum des Zylinders (Z1 bis Z4) erfasst, mit Einheiten, die
- einen Polytropenexponent (κ) bestimmen abhängig von mindestens zwei Messwerten (p[1], p[2], p[3], p[4]) des Drucks (p) in dem Brennraum, die während des Arbeitstaktes des Zylinders (Z1 bis Z4) nach Abschluss der Verbrennung eines in dem Zylinder (Z1 bis Z4) befindlichen Luft/Kraftstoff-Gemisches und vor einem Öffnen des Gasauslassventils (31) erfasst werden,
- eine erste Temperatur (T[5]) des Abgases ermitteln, die charakteristisch ist für die Temperatur des Abgases vor dem Öffnen des Gasauslassventils (31),
- eine zweite Temperatur (T[6]) des Abgases ermitteln, das nach dem Schließen des Gasauslassventils (31) in dem Brennraum des Zylinders verbleibt, und zwar abhängig von der ersten Temperatur (T[5]) des Abgases, dem dieser zugeordneten Druck (p[5]) in dem Brennraum, dem Druck (p[6]) in dem Brennraum nach dem Schließen des Gasauslassventils (31) und dem Polytropenexponenten (K), und
- ein Stellsignal (SG) zum Steuern eines Stellglieds der Brennkraftmaschine erzeugen abhängig von der zweiten Temperatur (T[6]) des Abgases.

## Claims

1. Method for controlling an internal combustion engine having at least one cylinder (Z1 to Z4) in which is embodied a combustion chamber and to which is assigned a piston (24), having an exhaust manifold (4) that communicates with the combustion chamber of the cylinder (Z1 to Z4) as a function of the position of a gas exhaust valve (31), and having a cylinder pressure sensor (37) that registers the pressure (p) in the combustion chamber of the cylinder (Z1 to Z4),
wherein
- a polytropic exponent (K) is determined as a function of at least two measured values (p[1], p[2], p[3], p[4]) of the pressure (p) in the combustion chamber that are registered during the power stroke of the cylinder (Z1 to Z4) once an air/fuel mixture contained in the cylinder (Z1 to Z4) has been completely burned and before the gas exhaust valve (31) opens,
- a first temperature (T[5]) of the exhaust gas is determined that is characteristic of the temperature of the exhaust gas before the gas exhaust valve (31) opens,
- a second temperature (T[6]) of the exhaust gas remaining in the combustion chamber of the cylinder after the gas exhaust valve (31) closes is determined, specifically as a function of the first temperature (T[5]) of the exhaust gas, of the pressure (p[5]), assigned to said temperature, in the combustion chamber, of the pressure (p[6]) in the combustion chamber after the gas exhaust valve has closed (31), and of the polytropic exponent (K) , and
- an actuation signal (SG) for controlling an actuating member of the internal combustion engine is generated as a function of the second temperature (T[6]) of the exhaust gas.

2. Method according to claim 1,
wherein the measured values (p[1], p[2], p[3], p[4]) of the pressure (p) of the exhaust gas in the combustion chamber of the cylinder (Z1 to Z4) are registered at a crankshaft angle (CRK) greater than a predefined crankshaft angle that is predefined such that burning of the air/fuel mixture will have been completed.

3. Method according to claim 2,
wherein the predefined crankshaft angle is greater than or equal to around 80° after the top dead centre of the piston (24).

4. Method according to claim 2 or 3,
wherein the predefined crankshaft angle is less than or equal to around 100° after the top dead centre of the piston (24).

5. Method according to one of the preceding claims,
wherein the first temperature (T[5]) of the exhaust gas is determined as a function of a pressure (p[5]) in the combustion chamber, which pressure is determined as a function of one of the measured values (p[1], p[2], p[3], p[4]) of the pressure (p) in the combustion chamber, of the magnitude that is characteristic of the volume (VOL[2]), assigned to the respective measured value (p[14], p[2], p[3], p[4]) of the pressure (p), of the combustion chamber, of the magnitude that is characteristic of the volume (VOL[5]) of the combustion chamber at which the exhaust gas has the first temperature, and of the polytropic exponent (K).

6. Method according to one of the preceding claims,
wherein the first temperature (T[5]) of the exhaust gas is determined by means of the general gas equation and the gas constant (R) is permanently predefined.

7. Method according to one of claims 1 to 6,
wherein the first temperature of the exhaust gas is determined by means of the general gas equation and the gas constant (R) is determined as a function of the air-fuel ratio in the combustion chamber of the cylinder (Z1 to 24).

8. Method according to one of the preceding claims,
wherein the pressure (p[6]) in the combustion chamber after the gas exhaust valve (31) closes is approximated using a predefined pressure value and the second temperature of the exhaust gas is determined as a function of an environmental parameter and/or of a rotational speed (n) and/or of the crankshaft angle of the opening or closing of the gas exhaust valve and/or as a function of a coolant temperature (TCO).

9. Method according to one of the preceding claims,
wherein the pressure (p[6]) in the combustion chamber is determined after the gas exhaust valve (31) closes as a function of at least one further pressure (p[6']) and the volumes (VOL[6'], VOL[6]) requiring to be assigned to the at least one further pressure (p[6']) and to the pressure (p[6]) in the combustion chamber after the gas exhaust valve (31) closes, with said further pressure (p[6']) being assigned to a crankshaft angle (CRK) lying within the crankshaft angle range in which the gas exhaust valve (31) is closed again but the gas intake valve (30) is not yet open again, and the further pressure (p[6']) being registered temporally after the pressure (p[6]).

10. Method according to claim 9,
wherein a further polytropic exponent (K') is determined as a function of at least one further pressure (p[6']), of another further pressure (p[6'']), and of the volumes VOL[6'], VOL[6"] requiring to be assigned to the at least one further pressure p[6'] and to the other further pressure (p[6'']) in the combustion chamber after the gas exhaust valve (31) closes, with the other further pressure (p[6'']) being assigned to a crankshaft angle (CRK) lying within the crankshaft angle range in which the gas exhaust valve (31) is closed again but the gas intake valve (30) is not yet open again, and the other further pressure (P[6'']) being registered temporally after the pressure (p[6]).

11. Method according to one of the preceding claims,
wherein a first fuel mass (MFF1) that is to be admixed into the combustion chamber of the cylinder (Z1 to Z4) after the gas exhaust valve (31) has closed and before the gas intake valve (30) has opened is determined as a function of the second temperature (T[6]) of the exhaust gas, and the injection valve (34) is controlled accordingly.

12. Method according to claim 11,
wherein a crankshaft angle (CRK_MFF1) at which the first fuel mass (MFF1) is admixed is determined as a function of the second temperature (T[6]).

13. Method according to one of claims 11 or 12,
wherein a crankshaft angle (CRK_MFF2) at which a second fuel mass (MFF2) is admixed is determined as a function of the second temperature (T[6]), with the second fuel mass (MFF2) being admixed into the cylinder (Z1 to Z4) after the gas intake valve (30) opens.

14. Device for controlling an internal combustion engine having at least one cylinder (Z1 to Z4) in which is embodied a combustion chamber and to which is assigned a piston (24), having an exhaust manifold (4) that communicates with the combustion chamber of the cylinder (Z1 to Z4) as a function of the position of a gas exhaust valve (31), and having a cylinder pressure sensor (37) that registers the pressure (p) in the combustion chamber of the cylinder (Z1 to Z4), having units which
- determine a polytropic exponent (κ) as a function of at least two measured values (p[1], p[2], p[3], p[4]) of the pressure (p) in the combustion chamber that are registered during the power stroke of the cylinder (Z1 to Z4) once an air/fuel mixture contained in the cylinder (Z1 to Z4) has been completely burned and before the gas exhaust valve (31) opens,
- determine a first temperature (T[5]) of the exhaust gas that is characteristic of the temperature of the exhaust gas before the gas exhaust valve (31) opens,
- determine a second temperature (T[6]) of the exhaust gas remaining in the combustion chamber of the cylinder after the gas exhaust valve (31) closes, specifically as a function of the first temperature (T[5]) of the exhaust gas, of the pressure (p[5]), assigned to said temperature, in the combustion chamber, of the pressure (p[6]) in the combustion chamber after the gas exhaust valve has closed (31), and of the polytropic exponent (K), and
- generate an actuation signal (SG) for controlling an actuating member of the internal combustion engine as a function of the second temperature (T[6]) of the exhaust gas.

## Revendications

1. Procédé de commande d'un moteur à combustion interne comportant au moins un cylindre (Z1 à Z4) dans lequel une chambre de combustion est formée et auquel un piston (24) est associé, le moteur comprenant un conduit d'échappement (4) étant en communication avec la chambre de combustion du cylindre (Z1 à Z4) en fonction de la position d'une soupape d'échappement des gaz (31), et un capteur de pression de cylindre (37) qui saisit la pression (p) régnant dans la chambre de combustion du cylindre (Z1 à Z4), procédé dans lequel
- un exposant de polytrope (κ) est déterminé en fonction d'au moins deux valeurs de mesure (p[1], p[2], p[3], p[4]) de la pression (p) dans la chambre de combustion, valeurs saisies au cours du temps moteur du cylindre (Z1 à Z4) après la fin de la combustion d'un mélange air/carburant dans le cylindre (Z1 à Z4) et avant l'ouverture de la soupape d'échappement des gaz (31),
- une première température (T[5]) du gaz d'échappement est déterminée qui est caractéristique de la température des gaz d'échappement avant l'ouverture de la soupape d'échappement des gaz (31),
- une deuxième température (T[6]) des gaz d'échappement restant dans la chambre de combustion du cylindre après la fermeture de la soupape d'échappement (31) est déterminée, et ce en fonction de la première température (T[5]) des gaz d'échappement, de la pression associée (p[5]) dans la chambre de combustion, de la pression (p[6]) dans la chambre de combustion après la fermeture de la soupape d'échappement des gaz (31), et de l'exposant de polytrope (K), et
- un signal de commande (SG) pour commander un actionneur du moteur à combustion interne est généré en fonction de la deuxième température (T[6]) des gaz d'échappement.

2. Procédé selon la revendication 1, dans lequel les valeurs de mesure (p[1], p[2], p[3], p[4]) de la pression (p) des gaz d'échappement dans la chambre de combustion du cylindre (Z1 à Z4) sont saisies sous un angle de vilebrequin (CRK) plus grand qu'un angle de vilebrequin prédéterminé de telle sorte que la combustion du mélange air/carburant soit terminée.

3. Procédé selon la revendication 2, dans lequel l'angle de vilebrequin prédéterminé est plus grand que, ou égal à, environ 80° après le point mort haut du piston (24).

4. Procédé selon la revendication 2 ou 3, dans lequel l'angle de vilebrequin prédéterminé est plus grand que, ou égal à, environ 100° après le point mort haut du piston (24).

5. Procédé selon l'une des revendications précédentes, dans lequel la première température (T[5]) des gaz d'échappement est déterminée en fonction d'une pression (p[5]) dans la chambre de combustion, pression déterminée en fonction d'une des valeurs de mesure (p[1], p[2], p[3], p[4]) de la pression (p) dans la chambre de combustion ; de la grandeur caractéristique du volume (VOL[2]) de la chambre de combustion associé à la valeur correspondante (p[1], p[2], p[3], p[4]) de la pression (p) ; de la grandeur caractéristique du volume (VOL[5]) de la chambre de combustion où les gaz d'échappement sont à la première température ; et de l'exposant de polytrope (K) .

6. Procédé selon l'une des revendications précédentes, dans lequel la première température (T[5]) des gaz d'échappement est déterminée à l'aide de l'équation générale des gaz, la constante des gaz (R) étant une valeur fixe prédéterminée.

7. Procédé selon l'une des revendications 1 à 6, dans lequel la première température des gaz d'échappement est déterminée à l'aide de l'équation générale des gaz, et une constante des gaz (R) est établie en fonction du rapport air/carburant dans la chambre de combustion du cylindre (Z1 à Z4).

8. Procédé selon l'une des revendications précédentes, dans lequel la pression (p[6]) dans la chambre de combustion après la fermeture de la soupape d'échappement des gaz (31) est approchée par une valeur de pression prédéterminée, et la deuxième température des gaz d'échappement est déterminée en fonction d'un paramètre d'environnement et/ou d'un nombre de tours (n) et/ou de l'angle de vilebrequin d'ouverture ou de fermeture de la soupape d'échappement des gaz et/ou d'une température de liquide de refroidissement (TCO).

9. Procédé selon l'une des revendications précédentes, dans lequel la pression (p[6]) dans la chambre de combustion est déterminée après la fermeture de la soupape d'échappement des gaz (31) en fonction d'au moins une autre pression (p[6']) et des volumes (VOL[6'], VOL[6]) associés à la au moins autre pression (p[6']) et à la pression (p[6]) régnant dans la chambre de combustion après la fermeture de la soupape d'échappement des gaz (31), l'autre pression (p[6']) étant associée à un angle de vilebrequin CRK) situé à l'intérieur de la plage des angles de vilebrequin dans laquelle la soupape d'échappement des gaz (31) est de nouveau fermée et la soupape d'admission des gaz (30) n'est pas encore ouverte, l'autre pression (p[6']) étant saisie après la saisie de la pression (p[6]).

10. Procédé selon la revendication 9, dans lequel un autre exposant de polytrope (K') est déterminé en fonction de la au moins une autre pression (p[6']), de l'autre pression encore (p[6"]), et des volumes (VOL[6'], VOL[6"]) associés à la au moins une autre pression (p[6']) et à l'autre pression encore (p[6"]) dans la chambre de combustion après la fermeture de la soupape d'échappement des gaz (31), l'autre pression encore (p[6"]) étant associée à un angle de vilebrequin (CRK) situé à l'intérieur de la plage des angles de vilebrequin dans laquelle la soupape d'échappement des gaz (31) est de nouveau fermée et la soupape d'admission des gaz (30) n'est pas encore ouverte, l'autre pression encore (p[6"]) étant saisie après la saisie de la pression (p[6]).

11. Procédé selon l'une des revendications précédentes, dans lequel une première masse de carburant (MFF1) devant être dosée dans la chambre de combustion du cylindre (Z1 à Z4) après la fermeture de la soupape d'échappement des gaz (31) et avant l'ouverture de la soupape d'admission des gaz (30), est déterminée en fonction de la deuxième température (T[6]) des gaz d'échappement, et la soupape d'injection (34) est commandée en conséquence.

12. Procédé selon la revendication 11, dans lequel un angle de vilebrequin (CRK_MFF1) sous lequel une première masse de carburant (MFF1) est dosée est déterminé en fonction de la deuxième température (T[6]).

13. Procédé selon l'une des revendications 11 ou 12, dans lequel un angle de vilebrequin (CRK MFF2) sous lequel une deuxième masse de carburant (MFF2) est dosée, est déterminé en fonction de la deuxième température (T[6]), la deuxième masse de carburant (MFF2) étant dosée dans le cylindre (Z1 à Z4) après l'ouverture de la soupape d'admission des gaz.

14. Dispositif de commande d'un moteur à combustion interne comportant au moins un cylindre (Z1 à Z4) dans lequel une chambre de combustion est formée, et auquel un piston (24) est associé, comprenant un conduit d'échappement (4) en communication avec la chambre de combustion du cylindre (Z1 à Z4) en fonction de la position d'une soupape d'échappement des gaz (31), et un capteur de pression de cylindre (37) qui saisit la pression (p) régnant dans la chambre de combustion du cylindre (Z1 à Z4), et comprenant des unités qui
- déterminent un exposant de polytrope (K) en fonction d'au moins deux valeurs de mesure (p[1], p[2], p[3], p[4]) de la pression (p) dans la chambre de combustion, saisies au cours du temps moteur du cylindre (Z1 à Z4) après la fin de la combustion d'un mélange air/carburant dans le cylindre (Z1 à Z4) et avant l'ouverture de la soupape d'échappement des gaz (31),
- déterminent une première température (T[5]) des gaz d'échappement qui est caractéristique de la température des gaz d'échappement avant l'ouverture de la soupape d'échappement des gaz (31),
- déterminent une deuxième température (T[6]) du gaz d'échappement restant dans la chambre de combustion du cylindre après la fermeture de la soupape d'échappement des gaz (31), et ce en fonction de la première température (T[5]) du gaz d'échappement, de la pression y associée (p[5]) dans la chambre de combustion, de la pression (p[6]) dans la chambre de combustion après la fermeture de la soupape d'échappement des gaz (31) et de l'exposant de polytrope (κ), et
- génèrent un signal de commande (SG) pour commander un actionneur du moteur à combustion interne en fonction de la deuxième température (T[6]) des gaz d'échappement.
